# EUROPÄISCHE PATENTANMELDUNG

(11) **EP 2 527 711 A1**
(43) Veröffentlichungstag der Anmeldung: **28.11.2012**
(21) Anmeldenummer: 12003244.6
(22) Anmeldetag: 03.05.2012
(51) Int. Cl.: F16N 7/32

(54) **Aerosol-Schmiervorrichtung, Schmieranordnung und Schmierverfahren**

(30) Priorität: 26.05.2011 DE 102011102539
(71) Anmelder: Linde Aktiengesellschaft, 80331 Munich (DE)
(72) Erfinder: Foret, Pierre, 80796 München (DE)
(74) Vertreter: Gellner, Bernd

(57) **Zusammenfassung**

Die vorliegende Erfindung betrifft eine Schmiervorrichtung (10) für eine zu schmierende Einrichtung (20) mit wenigstens zwei Reibpartnern (21, 22), die Mittel (11) zur Erzeugung eines sauerstofffreien Aerosols eines flüssigen Schmiermittels in einem Trägerfluid und Mittel (12) zum Zuführen des Aerosols zu der zu schmierenden Einrichtung (20) aufweist, die mit der zu schmierenden Einrichtung (20) koppelbar sind.

## Beschreibung

Die vorliegende Erfindung betrifft eine Aerosol-Schmiervorrichtung, eine Anordnung mit einer derartigen Schmiervorrichtung sowie ein entsprechendes Schmierverfahren.

### Stand der Technik

Die Schmierung von Maschinenelementen mit Schmiermitteln wie Fetten, Ölen oder Festschmierstoffen erfüllt unterschiedliche Aufgaben. Sie dient einerseits der Verhinderung oder Reduzierung von Verschleißerscheinungen an Kontaktstellen von sogenannten Reibpartnern, einem Abbau von Spannungsspitzen sowie, beispielsweise in Wälzlagern, der Verringerung zusätzlicher Reibungsschubspannungen an Oberflächen. Darüber hinaus kommen Schmiermittel als Korrosionsschutz zum Einsatz und werden, sofern ein ausreichender Schmiermittelaustausch und damit eine Abfuhr von Wärme gewährleistet werden kann, auch zur Kühlung von Maschinenelementen verwendet.

Ziel der Schmierung ist es, einander kontaktierende Oberflächen der Reibpartner durch einen hydrodynamischen Flüssigkeitsfilm oder eine schützende Reaktionsschicht zu trennen. Bei der hydrodynamischen Schmierfilmbildung spielen häufig auch elastische Verformungen eine Rolle, so dass auch von einer sogenannten elastohydrodynamischen Schmierung gesprochen wird. Bei der Schmierung wird eine vollständige Trennung der Reibpartner angestrebt. Diese lässt sich durch eine geeignete Kombination der Schmiermittelviskosität, der Bewegungsgeschwindigkeit der Reibpartner und deren Kontaktdruck, aber auch durch konstruktive Anpassungen erreichen.

Wie erwähnt, sind als Schmiermittel Schmieröle, Schmierfette und Festschmierstoffe bekannt. Im Rahmen dieser Anmeldung liegt das Hauptaugenmerk dabei auf flüssigen Schmiermitteln wie z. B. Schmierölen. Wichtige beeinflussbare Kenngrößen von Schmierölen sind die Dichte, der Viskositätsindex, die Scherstabilität, der sogenannte Cloud-and-Pour-Point, das Neutralisationsvermögen, die Neutralisationszahl, die Gesamtbasenzahl und der Flammpunkt. Ferner beeinflussen die Wärmekapazität, die Luftaufnahmekapazität sowie der Gehalt an Wasser und Fremdstoffen die Eigenschaften eines Schmieröls.

Zur Modifikation tribologisch relevanter Schmieröleigenschaften, beispielsweise des Viskositäts-/Temperatur- und/oder des Reibungs- und Verschleißverhaltens, jedoch auch zur Erhöhung der Oxidationsbeständigkeit oder der Verhinderung der Schaumbildung sind unterschiedlichste Schmierstoffadditive bekannt.

Additive können dabei in Form kommerziell erhältlicher sogenannter Additivpakete einem Schmieröl beigegeben werden. In modernen Motorenölen liegen 10 bis 20 % des Gesamtvolumens in Form von Additiven vor. Einen zusätzlichen Anteil, typischerweise etwa 3 %, stellen Polymerzusätze dar.

Die Lebensdauer von Schmierölen ist begrenzt. Aufgrund von Interaktionen mit dem zu schmierenden System und der umgebenden Atmosphäre kann die Lebensdauer des Schmieröls und auch jene des tribologischen Systems insgesamt beträchtlich reduziert werden. Als besonders kritisch sind dabei Oxidationsvorgänge anzusehen, die zu einer Erhöhung des Säurewerts und damit zu einer erhöhten Korrosivität des Schmieröls führen. Eine Zunahme der Viskosität bewirkt sich über die Zeit ändernde tribologische Eigenschaften des Systems. Ablagerungen, die aufgrund von Korrosion durch sich abscheidende Schmierölkomponenten entstehen, können Blockaden verursachen. Ein Verlust von Additiven kann dazu führen, dass bestimmte Bestandteile des Schmieröls nicht mehr ausreichend geschützt sind, wodurch dieses an Qualität verliert. Damit sind häufige Ölwechsel bzw. Wartungsintervalle erforderlich.

Es ist daher wünschenswert, die Lebensdauer eines Schmieröls, allgemeiner eines flüssigen Schmiermittels, insbesondere eines mineralölbasierten Schmieröls, zu erhöhen.

### Offenbarung der Erfindung

Vor diesem Hintergrund stellt die vorliegende Erfindung eine Aerosol-Schmiervorrichtung für eine Einrichtung mit wenigstens zwei Reibpartnern, eine Anordnung mit einer derartigen Schmiervorrichtung sowie ein entsprechendes Schmierverfahren mit den Merkmalen der unabhängigen Patentansprüche bereit.

Bevorzugte Ausgestaltungen sind Gegenstand der jeweiligen Unteransprüche sowie der nachfolgenden Beschreibung.

### Vorteile der Erfindung

Die Erfindung schlägt eine mit einer zu schmierenden Einrichtung koppelbare Schmiervorrichtung vor, die Mittel zur Erzeugung eines sauerstofffreien Aerosols eines flüssigen Schmiermittels (also z.B. eines Schmieröls) in einem Trägerfluid aufweist, sowie über Mittel zum Zuführen des entsprechend erzeugten Aerosols zu der zu schmierenden Einrichtung verfügt. Das vorzugsweise verwendete Trägerfluid ist gasförmig und weist keinen Sauerstoff auf. Vorzugsweise ist das Trägerfluid auch frei von anderen korrosiven Bestandteilen, insbesondere frei von Wasser und reibenden Partikeln.

Wenngleich im Rahmen der vorliegenden Anmeldung von einem "sauerstofffreien" Aerosol oder einem "sauerstofffreien" Trägerfluid die Rede ist, sei darunter auch ein Aerosol oder Trägerfluid verstanden, das noch geringe (Rest-)Gehalte an gelöstem Sauerstoff aufweist oder zur Sauerstoffbildung in geringem Umfang in der Lage ist. Eine vollständige Sauerstofffreiheit ist zwar wünschenswert, jedoch in der Regel mit beträchtlichen Mehrkosten verbunden.

Verfahren zur Entfernung von Sauerstoff, beispielsweise aus entsprechenden Gasen, sind hinlänglich bekannt. Beispielsweise kann Sauerstoff aus Luft in einer Kältefalle auskondensiert oder katalytisch abgeschieden werden. Inertgase wie Argon, Stickstoff oder Kohlendioxid können auch in flüssiger, sauerstofffreier Form bereitgestellt und vor der Verwendung in der Schmiervorrichtung in die Gasphase überführt werden.

Durch die erfindungsgemäßen Maßnahmen wird es ermöglicht, in einer zu schmierenden Einrichtung ein sauerstofffreies Schmiermittel-/Gassystem zu schaffen, das dort dauerhaft bereitsteht und die Lebensdauer reibender Komponenten signifikant verlängert. Die Wartungsintervalle entsprechender Anlagen können damit deutlich vergrößert werden, was zu einer höheren Verfügbarkeit und/oder zu geringeren Wartungskosten führt. Aufgrund der sauerstofffreien Schmiermittelatmosphäre können auch sauerstoffempfindliche Schmiermitteladditive verwendet werden, ohne dass ein häufiger Schmiermittelwechsel erfolgen müsste.

Als besonders vorteilhaft wird angesehen, wenn die Schmiervorrichtung Mittel zur Erzeugung eines sauerstofffreien Aerosols in Form eines Schmiermittelreservoirs und einer in dem Schmiermittelreservoir angeordneten Einbringeinrichtung zum Einbringen des Trägerfluids in das Schmiermittel aufweist. Bei der Einbringeinrichtung kann es sich beispielsweise um eine Gaseinperleinrichtung handeln, die es ermöglicht, Gasbläschen zu erzeugen, die das Schmiermittel durchströmen und beim Durchströmen des Schmiermittels ein Aerosol oder einen Schmiermittelnebel erzeugen. Die Gasbläschen können beispielsweise durch ein Filter (Membran oder Fritte) erzeugt werden, wobei die Gasbläschengröße durch die jeweilige Porengröße beeinflusst wird. Die Einbringung des Trägerfluids, und damit die Erzeugung des Aerosols, kann kontinuierlich oder intermittierend, z.B. in Schmierintervallen, erfolgen.

Typische Gasdurchsätze liegen beispielsweise im Bereich von 1 Liter bis 20 Normkubikmetern pro Stunde.

Wenn im Rahmen dieser Erfindung von einem "Aerosol" die Rede ist, sei darunter jedes System verstanden, in dem ein flüssiges Schmiermittel in einem gasförmigen Trägerfluid, z.B. in Form von Tröpfchen, vorliegt. Die jeweilige Tröpfchengröße kann dabei sehr unterschiedlich sein und im Bereich zwischen 0,5 nm und mehreren 10 µm liegen.

Eine entsprechende Schmieranordnung weist eine zu schmierende Einrichtung mit wenigstens zwei Reibpartnern und eine Schmiervorrichtung wie zuvor erläutert auf. Die Schmiervorrichtung ist dabei mit Mitteln zum Zuführen des Aerosols zu der zu schmierenden Einrichtung versehen. Vorteilhafterweise sind die zu schmierende Einrichtung und die Schmiervorrichtung durch einen gasdichten Kanal miteinander verbunden. Durch eine Kopplung der Schmiervorrichtung mit der zu schmierenden Einrichtung wird ein geschlossenes System geschaffen, wodurch das Eindringen von Sauerstoff in die Schmieranordnung verhindert werden kann.

Vorteilhafterweise umfasst eine entsprechende Schmieranordnung eine zu schmierende Einrichtung, die zum Durchströmen mit dem sauerstofffreien Aerosol eingerichtet ist. Hierdurch kann kontinuierlich oder intermittierend eine Schmiermittelatmosphäre bzw. ein sauerstofffreies Aerosol in der zu schmierenden Einrichtung erneuert werden, wodurch ein besonders effektiver Schutz erzielt wird.

Vorteilhafterweise weist die zu schmierende Einrichtung hierzu Auslassöffnungen für flüssiges Schmiermittel, Aerosol und/oder Gas auf. Eine Abscheideeinrichtung für flüssiges Schmiermittel und entsprechende Auslassöffnungen können vorteilhaft sein, um aus dem Aerosol, beispielsweise durch Kondensation, abgeschiedenes Schmiermittel aus der zu schmierenden Einrichtung zu entfernen. Das entfernte flüssige Schmiermittel kann dann beispielsweise einer Reinigung (z.B. durch Filtration oder chemische Aufbereitung) unterworfen und/oder einer Schmiervorrichtung erneut zugeführt werden. In gleicher Weise kann Gas, das keine Schmiermittelbestandteile mehr aufweist, aus dem System entfernt werden. Es kann auch vorgesehen sein, die zu schmierende Einrichtung kontinuierlich mit Aerosol zu durchströmen und das Aerosol in einer Abscheideeinrichtung weiter zu behandeln. Beispielsweise kann in einer Abscheideeinrichtung flüssiges Schmiermittel abgeschieden werden und, wie oben erläutert, erneut einer erfindungsgemäßen Schmiervorrichtung zugeführt werden.

Vorteilhaft kann auch sein, eine Schmieranordnung bereitzustellen, die eine Heizeinrichtung für das Trägerfluid, das Schmiermittel und/oder das Aerosol aufweist. Wie allgemein bekannt, weisen bestimmte erwärmte Gase, beispielsweise Acetylen oder Kohlenmonoxid, einen positiven Einfluss auf die tribologischen Eigenschaften eines zu schmierenden Systems auf. Es kann daher vorgesehen sein, mittels einer Gasheizung einen entsprechend erwärmten Gasstrom bereitzustellen. Durch entsprechende Heizeinrichtungen wird eine besonders gute Steuerbarkeit von Parametern des Schmiermittels und/oder des Aerosols, beispielsweise seiner Dichte, seiner Viskosität und/oder seiner Komprimierbarkeit, gewährleistet.

Bei einer erhöhten Temperatur in einer Schmiervorrichtung kann gegebenenfalls eine größere Menge an Schmiermittel in dem Aerosol zur Verfügung gestellt werden. Wird erwärmtes Aerosol in ein (kühles) Getriebe eingebracht, werden flüssige Aerosolpartikel an den jeweiligen Komponenten durch Kondensation abgeschieden, so dass eine besonders gute, zielgerichtete Schmierung erreicht werden kann.

Eine Erwärmung kann dabei sowohl in der Schmiervorrichtung als auch in der zu schmierenden Einrichtung erfolgen, wahlweise kann ein Gasstrom, ein Schmiermittel und/oder das erhaltene Aerosol erwärmt werden.

Ein erfindungsgemäßes Verfahren zum Schmieren umfasst die Erzeugung eines sauerstofffreien Aerosols unter Verwendung der zuvor erläuterten Schmiervorrichtung.

Vorteilhafterweise können in einem entsprechenden Verfahren als Trägerfluid Inertgase wie Argon oder Stickstoff, aber auch Gase wie Kohlendioxid, Kohlenmonoxid und/oder Acetylen verwendet werden, von denen insbesondere auch bekannt ist, dass sie die tribologischen Eigenschaften eines zu schmierenden Systems positiv beeinflussen. Entsprechende Gasmischungen können ebenfalls Verwendung finden.

Als Schmiermittel wird vorzugsweise ein mineralölbasiertes Schmiermittel, insbesondere ein Mineralöl mit Polymerzusätzen und/oder Additiven verwendet. Wie bereits zuvor erläutert, können aufgrund des verbesserten Schutzes des Schmiermittels durch die erfindungsgemäßen Maßnahmen auch Polymerzusätze verwendet werden, die in herkömmlichen Schmiersystemen nicht zum Einsatz kommen könnten, weil sie der schädlichen Oxidationswirkung des Sauerstoffs ausgesetzt wären. Insbesondere kann durch den Einsatz der Erfindung jedoch auf bestimmte Additive wie z. B. Antioxidantien verzichtet werden, wodurch bedeutende Kostenvorteile erzielt werden.

Wie bereits erwähnt, kann in einem entsprechenden Verfahren eine Viskosität, eine Dichte und/oder eine Komprimierbarkeit des Schmiermittels und/oder des Aerosols eingestellt werden. Dies kann beispielsweise durch eine geeignete Gaszusammensetzung und -temperatur und/oder eine geeignete Strömungsgeschwindigkeit oder durch entsprechend eingestellte Drücke erfolgen.

Das erfindungsgemäße Verfahren lässt sich bei einer Reihe von zu schmierenden Einrichtungen wie beispielsweise Turbinen von Windkraftanlagen, Motorenteilen, Lagern, Ventilen und Ventilantrieben und schneidenden Werkzeugen einsetzen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

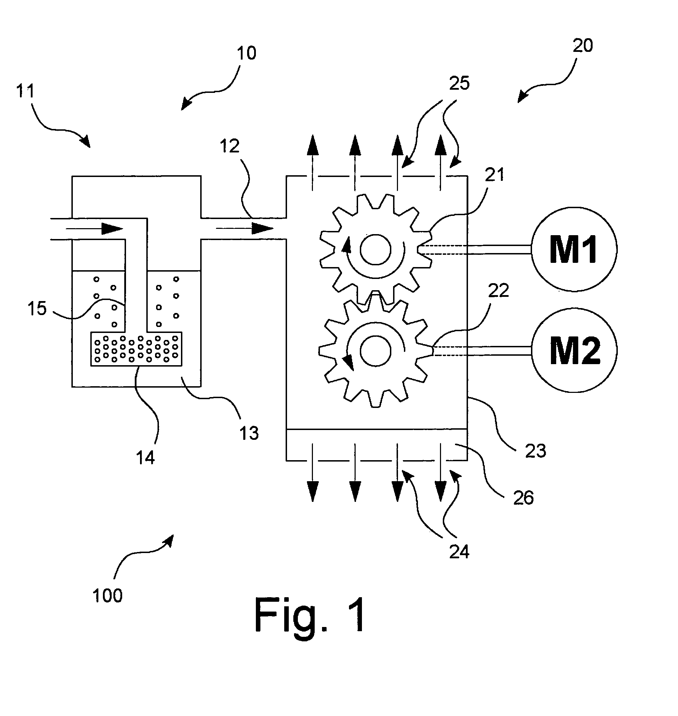

- Figur 1: zeigt eine Schmieranordnung gemäß einer besonders bevorzugten Ausführungsform der Erfindung.

In Figur 1 ist eine Schmieranordnung gemäß einer besonders bevorzugten Ausführungsform der Erfindung dargestellt und insgesamt mit 100 bezeichnet. Die Schmieranordnung 100 umfasst eine Schmiervorrichtung 10 und eine zu schmierende Einrichtung 20. Die Schmiervorrichtung 10 verfügt über Mittel 11 zur Erzeugung eines sauerstofffreien Schmiermittel-Aerosols mit einem Reservoir 13 für flüssiges Schmiermittel und eine in dem Reservoir 13 angeordnete Einbringeinrichtung 14 zum Einbringen eines Trägerfluids in das Schmiermittel. Die Einbringeinrichtung 14 umfasst eine Zuleitung 15 für das Trägerfluid (Gas) und an deren Ende vorzugsweise eine Membran und/oder eine Fritte, mittels derer Gasbläschen in dem Schmiermittel erzeugt werden können.

Mittel 12 zur Übertragung des in der Schmiervorrichtung durch die Einperlung gebildeten Aerosols in eine zu schmierende Einrichtung 20 sind vorgesehen.

Die zu schmierende Einrichtung 20 umfasst wenigstens zwei Reibpartner 21, 22, die als Zahnräder symbolisiert und durch Motoren M1 und M2 angetrieben sind. Die Reibpartner sind in einem Gehäuse 23 untergebracht, das zumindest teilweise gasdicht ist und derart ausgebildet ist, dass ein einströmendes Aerosol in kontrollierter Menge in dem Gehäuse 23 vorliegt und/oder dieses in kontrollierter Geschwindigkeit durchströmen kann. Bodenseitig des Gehäuses 23 können Auslassöffnungen 24 für flüssiges Schmiermittel vorgesehen sein, die eine Entfernung aus dem Aerosol auskondensierten Schmiermittels 26 gewährleisten. An anderer Stelle, z.B. deckelseitig des Gehäuses 23, können Auslassöffnungen 25 für Aerosol und/oder Gas bereitgestellt sein.

Die zu schmierende Einrichtung 20 kann wahlweise auch zur Tauchschmierung ausgebildet sein, wobei ein Schmiermittelsumpf zumindest teilweise durch das aus dem Aerosol auskondensierende Schmiermittel 26 gebildet oder gespeist werden kann.

### Bezugszeichenliste

- 10: Schmiervorrichtung
- 11: Mittel zur Aerosolerzeugung
- 12: Übertragungsmittel
- 13: Reservoir
- 14: Einbringeinrichtung
- 15: Zuleitung
- 20: Einrichtung
- 21: Reibpartner
- 22: Reibpartner
- 23: Gehäuse
- 24: Auslassöffnung
- 25: Auslassöffnung
- 26: Schmiermittel
- 100: Schmieranordnung

## Patentansprüche

1. Schmiervorrichtung (10) für eine zu schmierende Einrichtung (20) mit wenigstens zwei Reibpartnern (21, 22), **dadurch gekennzeichnet, dass** die Schmiervorrichtung (10) Mittel (11) zur Erzeugung eines sauerstofffreien Aerosols eines flüssigen Schmiermittels in einem Trägerfluid aufweist und Mittel (12) zum Zuführen des Aerosols zu der zu schmierenden Einrichtung (20) vorgesehen sind, die mit der zu schmierenden Einrichtung (20) koppelbar sind.

2. Schmiervorrichtung (10) nach Anspruch 1, bei der die Mittel zur Erzeugung des sauerstofffreien Aerosols ein Schmiermittelreservoir (13) für das flüssige Schmiermittel und eine in dem Schmiermittelreservoir (13) angeordnete Einbringeinrichtung (14) zum Einbringen des Trägerfluids in das Schmiermittel aufweisen.

3. Anordnung (100) mit einer zu schmierenden Einrichtung (20) mit wenigstens zwei Reibpartnern (21, 22) und einer mit der zu schmierenden Einrichtung (20) gekoppelten Schmiervorrichtung (10) gemäß einem der Ansprüche 1 oder 2.

4. Anordnung (100) nach Anspruch 3, bei der die zu schmierende Einrichtung (20) zum Durchströmen mit dem sauerstofffreien Aerosol eingerichtet ist.

5. Anordnung (100) nach Anspruch 4, bei der die zu schmierende Einrichtung (20) Auslassöffnungen für flüssiges Schmiermittel, Aerosol und/oder Gas aufweist.

6. Anordnung (100) nach einem der Ansprüche 3 bis 5, die eine Heizeinrichtung für das Trägerfluid, das Schmiermittel und/oder das Aerosol aufweist.

7. Verfahren zum Schmieren einer Einrichtung (20) mit wenigstens zwei Reibpartnern (21, 22), bei dem mittels einer Schmiervorrichtung (10) nach einem der Ansprüche 1 bis 2 ein sauerstofffreies Aerosol eines flüssigen Schmiermittels in einem Trägerfluid erzeugt und der Einrichtung (20) zugeführt wird.

8. Verfahren nach Anspruch 7, bei dem als Trägerfluid Argon, Stickstoff, Kohlendioxid, Kohlenmonoxid und/oder Acetylen verwendet wird.

9. Verfahren nach Anspruch 7 oder 8, bei dem als flüssiges Schmiermittel ein mineralölbasiertes Schmiermittel, insbesondere ein Mineralöl mit Polymerzusätzen und/oder Additiven, verwendet wird.

10. Verfahren nach einem der Ansprüche 7 bis 9, bei dem eine Temperatur, eine Viskosität, eine Dichte und/oder eine Komprimierbarkeit des Schmiermittels und/oder des sauerstofffreien Aerosols eingestellt werden.
